# EUROPÄISCHE PATENTSCHRIFT

(11) **EP 3 679 367 B1**
(45) Veröffentlichungstag und Bekanntmachung des Hinweises auf die Patenterteilung: **07.07.2021**
(21) Anmeldenummer: 18779203.1
(22) Anmeldetag: 06.09.2018
(51) Int. Cl.: G01N 30/24, G01N 35/10

(54) **PROBENGEBER UND ENTNAHMEVERFAHREN, INSBESONDERE FÜR DIE FLÜSSIGCHROMATOGRAFIE**
SAMPLE INJECTOR AND SAMPLING METHOD, IN PARTICULAR FOR LIQUID CHROMATOGRAPHY
INJECTEUR D'ÉCHANTILLON ET PROCÉDÉ D'ÉCHANTILLONAGE, EN PARTICULIER POUR LA CHROMATOGRAPHIE EN PHASE LIQUIDE

(30) Priorität: 06.09.2017 CH 11112017
(43) Veröffentlichungstag der Anmeldung: 15.07.2020
(73) Patentinhaber: Döbelin, Werner, 4153 Reinach BL (CH)
(72) Erfinder: Döbelin, Werner, 4153 Reinach BL (CH)
(74) Vertreter: Körner, Thomas Ottmar
(86) Internationale Anmeldenummer: PCT/EP2018/074055
(87) Internationale Veröffentlichungsnummer: WO 2019/048570

(56) Entgegenhaltungen:
- EP-A2- 0 884 575
- WO-A1-97/01750
- GB-A- 2 075 672
- US-A1- 2011 189 713

## Beschreibung

Die Erfindung bezieht sich auf das Gebiet der Probengeber und Probenentnahme, insbesondere für die Flüssigchromatografie. Sie betrifft ein Probengebersystem mit spezifischer Reinigungsvorrichtung für ein Verfahren zum Entnehmen einer flüssigen Probe aus einem Probengefäss. Ein solches Probengebersystem und Verfahren soll einerseits eine genaue Menge Probe injizieren können und andererseits dafür sorgen, dass die mit Probenmaterial aus der Probe kontaminierten Oberflächen in den Leitungen, schnell und effizient gereinigt werden können, bevor die nächste Probe für die Analyse mittels Flüssigchromatografie angesaugt wird.

Bei herkömmlichen Flüssigchromatografie -Probengebern, insbesondere bei HPLC/UHPLC-Probengebern für die (Ultra)High-Perfomance Liquid Chromotography werden grosse Anstrengungen unternommen, um möglichst genaue, insbesondere genau bemessene, Probenmengen verschleppungsarm zu injizieren. Dies soll dabei in der Regel auch mit relativ kleinen Probenmengen bis herab zu wenigen, insbesondere 1 bis 10, Mikrolitern oder Bruchteilen von, insbesondere 0,1 bis 0,8, Mikrolitern möglich sein. Die Hauptproblematik besteht darin, dass bei kombinierten Flüssigchromatografie-/Massenspektroskopie (LCMS) Systemen, durch den grossen quantitativen Messbereich bereits kleine Verschleppungen von Probenmaterial aus einer bereits erfolgten Injektion in den folgenden Injektionen Messfehler verursachen. Um dem entgegen zu wirken, werden aufwendige und zeitraubende Waschprozeduren angewandt (wie beispielsweise aus der WO97/01750 A1 ersichtlich, welche eine Vorrichtung zum Reinigen einer Sonde zur Entnahme flüssiger Proben beschreibt) und möglichst inerte Materialien verwendet. Bei immer mehr Messmethoden wird die Probengeberzykluszeit von Injektion zu Injektion und die immer noch vorhandene Restverschleppung zum limitierenden Faktor.

Der Erfindung liegt daher die Aufgabe zugrunde, ein Probengebersystem und ein Verfahrenbereit zu stellen, welches ein besonders geringes Mass an Verschleppung zeigt, und idealerweise eine Entnahme und/oder genaue Dosierung relativ kleiner Probenmengen erlaubt.

Diese Aufgabe wird erfindungsgemäss mit einem Probengebersystem für die Flüssigchromatografie, insbesondere für LCMS- oder MS-Systeme, sowie mit einem Verfahren zum Entnehmen einer flüssigen Probe aus einem Probengefäss gemäss dem unabhängigen Patentanspruch 1 gelöst.

Vorteilhafte Ausgestaltungen der Erfindung sind Gegenstand der abhängigen Ansprüche und/oder ergeben sich aus der nachfolgenden Beschreibung in Verbindung mit den Zeichnungen.

Ein Probengebersystem umfasst dabei eine Probenaufnahme; eine Probenansaugkanüle zum Ansaugen einer in der Probenaufnahme befindlichen Probe, welche Probenansaugkanüle mittels eines, insbesondere ersten, Antriebs in einer, nachfolgend als "Z" bezeichneten, Richtung zu der Probenaufnahme hin geführt werden kann, so dass ein distales Ende, insbesondere eine Spitze, der Probenansaugkanüle in die Probe eintaucht; sowie ein oberhalb der Probenaufnahme vorgesehenes Führungselement für die Probenansaugkanüle, welches als Wascheinrichtung ausgebildet ist; wobei
die Probenansaugkanüle mittels des Antriebs zumindest soweit von der Probenaufnahme zurückgefahren werden kann, dass das distale Ende der Probenansaugkanüle in der Wascheinrichtung gereinigt werden kann.

Die Probenaufnahme dient zur Aufbewahrung oder Bevorratung zumindest einer, in der Regel jedoch einer Vielzahl unterschiedlicher, flüssiger Proben, welche sich in der Regel in separaten, in die Probenaufnahme eingesetzten Behältern, insbesondere Probengefässen, befinden, und kann vorzugsweise in ein oder zwei Richtungen senkrecht zur Z-Richtung verfahren werden.

Zur Entnahme bzw. zum Ansaugen einer Probe wird die Probenansaugkanüle mittels des Antriebs soweit in Richtung der Probenaufnahme, in der Regel nach unten, und insbesondere parallel zu einer Kanülenachse, welche einer Längsachse zumindest eines in einer Längsrichtung ausgedehnten Teils der Probenansaugkanüle entsprechen kann, verfahren, dass das distale Ende der Probenansaugkanüle mitsamt einer an oder in der Nähe desselben gebildeten Ansaugöffnung in die Probe eintaucht, worauf zumindest ein Teil der Probe in und/oder durch die Probenansaugkanüle angesaugt wird. Anschliessend wird die Probenansaugkanüle zurückverfahren, in der Regel angehoben.

Dabei gewährleistet das Führungselement, insbesondere ein als Teil des Führungselements ausgebildeter und vorzugsweise parallel zur Längsachse der Probenansaugkanüle verlaufender, erster Führungskanal, beim Verfahren der Probenansaugkanüle eine definierte Bewegung derselben und verhindert zumindest weitgehend, dass sich diese sich in unerwünschter Weise verbiegt.

Dadurch, dass das Führungselement als Wascheinrichtung ausgebildet ist, kann eine Aussenseite der Probenansaugkanüle bereits gereinigt werden, während die Probenansaugkanüle zurückverfahren, insbesondere angehoben, wird. Dadurch kann ein Antrocknen von Probenmaterial an der Aussenseite verhindert werden. Dies wiederum erlaubt eine besonders effiziente Reinigung der Probenansaugkanüle selbst bei reduziertem Einsatz von Waschlösungsmittel, und somit eine Verminderung oder gar Minimierung von Verschleppung.

Die Probenansaugkanüle kann mittels des Antriebs zumindest soweit von der Probenaufnahme zurückgefahren bzw. nach oben verfahren werden, dass das distale Ende der Probenansaugkanüle in der Wascheinrichtung gereinigt werden kann, wobei das distale Ende insbesondere im Bereich des als Wascheinrichtung ausgebildeten Führungselements zu liegen kommt, und vorzugsweise mitsamt der Probenansaugkanüle noch weiter zurück bzw. nach oben verfahren werden kann, insbesondere vollständig aus dem ersten Führungskanal herausgefahren bzw. zurückgezogen werden kann.

Um eine möglichst wirksame Reinigung der Aussenseite der Probenansaugkanüle zu erlauben, ist als Teil der Wascheinrichtung ein Rückhaltevolumen sowie eine Zuleitung für ein Waschlösungsmittel vorgesehen. Dabei kann das Rückhaltevolumen in den ersten Führungskanal münden, welcher vorzugsweise durch die Probenansaugkanüle zumindest teilweise verschliessbar ist, wenn diese in den ersten Führungskanal hinein oder durch diesen hindurchragt. Dabei ist vorzugsweise ein Aussendurchmesser der Probenansaugkanüle kleiner, insbesondere 5% bis 80%, vorzugsweise 10% bis 50%, kleiner als ein Innendurchmesser des ersten Führungskanals, so dass ein Abfliessen von Waschlösungsmittel durch den ersten Führungskanal weitgehend, aber nicht vollständig verhindert wird. Das Rückhaltevolumen kann insbesondere durch einen becherförmigen Abschnitt des Führungselements gebildet sein, und/oder nach oben durch einen Überlauf begrenzt sein, welcher insbesondere von einem tiefsten Punkt auf einem oberen Rand des becherförmigen Abschnitts gebildet sein kann. Der becherförmig Abschnitt kann insbesondere, zumindest abschnittsweise, zumindest annähernd zylindrisch, konisch oder halbkugelförmig ausgebildet sein; sich in Richtung auf den ersten Führungskanal verjüngen; einen maximalen Innendurchmesser aufweisen, der einem 1.5- bis 25-fachen, vorzugsweise 2- bis 10-fachen des Aussendurchmessers der Probenansaugkanüle entspricht; und/oder nach oben geöffnet sein.

Das Führungselement kann als Teil einer Waschkammer ausgebildet sein, welche von oder in einer Führung bzw. Führungseinheit für die der Probenansaugkanüle gebildet wird oder ist, und welche Waschkammer eine Eintrittsöffnung und eine Austrittsöffnung für die Probenansaugkanüle umfasst, die insbesondere in einem Boden bzw. einer oberen Wand, Oberseite, einem Dach, Deckel oder einer Abdeckung der Waschkammer gebildet sind, und welche jeweils einen Führungskanal für die Probenansaugkanüle bilden, der insbesondere koaxial mit der Längsachse der Probenansaugkanüle verläuft.

Dabei kann das Führungselement, insbesondere der erste Führungskanal, die Austrittsöffnung für die Probenansaugkanüle bilden. Das als Wascheinrichtung ausgebildete Führungselement mit dem ersten Führungskanal kann aber auch in einem Inneren der Waschkammer vorgesehen sein, wobei die Eintrittsöffnung und die Austrittsöffnung für die Probenansaugkanüle einen zweiten bzw. dritten Führungskanal für die Probenansaugkanüle bilden. Dabei kann die Waschkammer insbesondere einen ersten Hohlraum und einen zweiten Hohlraum aufweisen, welche vorzugsweise ausschliesslich über das Führungselement, insbesondere den ersten Führungskanal, miteinander verbunden sind.

Eintritts- und/oder Austrittsöffnung können durch die Probenansaugkanüle zumindest teilweise verschliessbar sein, wenn diese in die entsprechende Öffnung hinein oder durch diese hindurchragt. Dabei ist vorzugsweise der Aussendurchmesser der Probenansaugkanüle kleiner, insbesondere 5% bis 80%, vorzugsweise 10% bis 50%, kleiner als ein Innendurchmesser der Eintritts- und/oder Austrittsöffnung, so dass ein Abfliessen von Waschlösungsmittel durch die Eintritts- und/oder Austrittsöffnung weitgehend, aber nicht vollständig verhindert wird.

Die Waschkammer umfasst vorzugsweise einen Ablauf für das Waschlösungsmittel, wobei das Probengebersystem ferner eine Absaugvorrichtung oder Pumpe umfassen kann mittels welcher Waschlösungsmittel aus der Waschkammer abgesaugt oder abgepumpt werden kann. Die Waschkammer kann dabei abgesehen von Eintritts- und Austrittsöffnung sowie Zuleitung und Ablauf hermetisch abgedichtet sein.

Das Führungselement, die Waschkammer und/oder die Wascheinrichtung können, insbesondere unabhängig von der Probenansaugkanüle, in Richtung zu der Probenaufnahme hin und von dieser weg, verfahrbar ausgeführt sein, wozu insbesondere ein zweiter Antrieb vorgesehen sein kann. Somit kann die Wascheinrichtung bzw. die Waschkammer möglichst nahe an die Probenaufnahme bzw. ein in dieser aufgenommenes Probengefäss gebracht werden, wodurch die Aussenseite der Probenansaugkanüle besonders effektiv gereinigt und ein Antrocknen von Probenmaterial besonders wirkungsvoll verhindert werden kann.

Dadurch, dass insbesondere die Eintrittsöffnung, die erste Austrittsöffnung und/oder der erste Führungskanal mit einem grösseren Innendurchmesser ausgeführt sind als der Aussendurchmesser der Probenansaugkanüle, können die entsprechenden Öffnungen bzw. Kanäle durch die Probenansaugkanüle teilweise, aber nicht ganz verschlossen, insbesondere nicht abgedichtet werden. Dadurch wird verhindert, dass die entsprechenden Öffnungen bzw. Kanäle durch Probenmaterial kontaminiert werden, wodurch Verschleppungen weiter signifikant reduziert werden können.

Die Waschkammer kann einen ersten Hohlraum 33 und einen, in der Regel oberhalb des ersten Hohlraums 33 angeordneten, zweiten Hohlraum 34 aufweisen, welche vorzugsweise ausschliesslich durch das - in diesem Fall im Inneren der Waschkammer vorgesehene - erste Führungselement, insbesondere den ersten Führungskanal, miteinander verbunden sind, und wobei das Rückhaltevolumen im zweiten Hohlraum gebildet ist. Hierdurch kann ein Heraustropfen oder -fliessen von Waschlösungsmittel aus der Austrittsöffnung vermieden werden, insbesondere in Verbindung mit einem Absaugen oder -pumpen von Waschlösungsmittel aus der Waschkammer wie weiter unten beschrieben. Insbesondere kann der Ablauf aus dem ersten Hohlraum herausgeführt sein und die Zuleitung in den zweiten Hohlraum münden. In Verbindung mit einem Absaugen oder -pumpen von Waschlösungsmittel aus der Waschkammer durch den Ablauf kann bei dieser Ausgestaltung eine besonders wirksame Reinigung der Aussenseite der Probenansaugkanüle erzielt werden, weil Waschlösungsmittel aus dem Rückhaltevolumen durch das erste Führungselement in den zweiten Hohlraum gesaugt wird, und dabei die Aussenseite der Probenansaugkanüle mit einer, in der Regel erhöhten, Geschwindigkeit umströmt, welche insbesondere durch eine Förderleistung des Absaugens oder -pumpens und/oder einer Wahl der verschiedenen Innen- und/oder Aussendurchmesser beeinflusst werden kann.

Ein erfindungsgemässes Probengebersystem für die Flüssigchromatografie (LC) insbesondere für LCMS- und MS-Systeme mit einer Injektionsventileinheit kann ein Injektionsventil aufweisen, das mit einer vorzugsweise starren Probenansaugkanüle vorzugsweise fest verbunden ist, einen oder mehrere Antriebe, mittels denen das Injektionsventil und die Probenansaugkanüle in Richtung zur Probe geführt werden können, und eine Führung für die Probenansaugkanüle, die als Waschkammer für die Probenansaugkanüle dient. Dadurch gelingt es auf effiziente und sichere Weise, die Injektionsventileinheit mit Injektionsventil und Probenansaugkanüle so zu bewegen, dass eine zu untersuchende Probe aus einem Probengefäss entnommen werden kann und zusätzlich eine verlässliche Reinigung einer potentiell kontaminierten Aussenseite der Probenansaugkanüle ermöglicht wird, da erfindungsgemäss die Führung der Kanüle, die ein unerwünschtes Ausweichen aus der Sollposition bei der Bewegung der Probenansaugkanüle verhindert, zugleich eine Waschkammer bildet, durch die die Probenansaugkanüle hindurchbewegt wird und dadurch das Waschlösungsmittel auf die Aussenseite der Probenansaugkanüle einwirken kann.

Die als Waschkammer ausgebildete Führung kann dabei in einem besonders vorteilhaften Probengebersystem so ausgebildet sein, dass in diese Waschlösungsmittel gepumpt und gleichzeitig abgesaugt oder abgepumpt werden kann. Dadurch ist ein sehr wirkungsvoller Waschlösungsmittelfluss gewährleistet, der sich durch einen besonderen Reinigungseffekt auszeichnet. Auch ist es möglich, eine höhere Strömungsgeschwindigkeit und auch eine kürzere Reinigungszeit und damit kürzere Betriebszeit für den Chromatografen, insbesondere den Flüssiggaschromatografen, zu erreichen.

In einem weiteren vorteilhaften Probengebersystem kann die als Waschkammer ausgebildete Führung, insbesondere das Führungselement, so ausgebildet sein, dass sie einen becherförmigen Abschnitt mit einem grösseren Durchmesser als die Probenansaugkanüle aufweist, durch den die Probenansaugkanüle geführt wird und die mit Waschlösungsmittel beaufschlagt werden kann, wobei der becherförmige Abschnitt insbesondere zumindest einen Teil des Rückhaltevolumen definieren oder bilden kann. Das in den Abschnitt eingebrachte Waschlösungsmittel kann in dem Abschnitt bis zum Überlaufen gesammelt werden, insbesondere wenn der erste Führungskanal zumindest teilweise durch die Probenansaugkanüle zumindest teilweise verschlossen ist, und ermöglicht ein sicheres Reinigen der Aussenflächen der hindurchgeführten Probenansaugkanüle, auch wenn nur geringe Mengen an Waschlösungsmittel zugeführt wurden. Dadurch wird ein effektives Reinigen der Aussenseite der Probenansaugkanüle ohne zusätzlichen Reinigungsschritt ermöglicht, so dass die Probengeberzykluszeit nicht unnötig verlängert wird. Gleichzeitig wird der Bereich der mit Probe bzw. Probenmaterial kontaminierten Oberflächen möglichst klein gehalten und die Menge an notwendigem Waschlösungsmittel klein gehalten.

Vorzugsweise kann das Injektionsventil des Probengebersystems mit einer Probenansaugkanüle fest zu einer starren Einheit verbunden sein, die insbesondere mit einem gemeinsamen Antrieb bewegt werden kann. Auf diese Weise ist eine einfache und gleichzeitig sichere Handhabung des erfindungsgemässen Probengebersystems gewährleistet. Zudem gelingt es, den Aufbau des Antriebes sehr kompakt zu gestalten, wodurch ein Einsatz in einer Vielzahl von Chromatografen, insbesondere Flüssiggaschromatografen, insbesondere mit Massenspektroskopie-Kopplung möglich ist.

In einer bevorzugten Ausbildung des Probengebersystems können eine oder mehrere Führungsstangen der Probenansaugkanüle als Waschlösungsmittel-Zuleitung und/oder Waschlösungsmittel-Absaugkanal ausgebildet sein. Die Führungsstangen der Probenansaugkanüle stellen eine definierte Bewegung der Probenansaugkanüle wie auch der Injektionsventileinheit mit Injektionsventil von und zum Probengefäss sicher, wodurch die Entnahme der Probe sehr verlässlich und schnell erfolgen kann. Im Rahmen dieser Bewegung erfolgt die erfindungsgemässe Reinigung der Probenansaugkanüle. Durch die eine oder mehrere Führungsstangen kann zum einen Platz gespart werden, da zusätzliche Leitungen wegfallen, zum anderen wird der Aufbau des Probengebersystems vereinfacht und dadurch die Handhabung sicherer.

In dem erfindungsgemässen Probengebersystem kann besonders vorteilhaft ein Dilutor vorgesehen sein, der über einen Hohlstempel verfügt, durch den, insbesondere von hinten, mittels Ventil und Pumpe, Waschlösungsmittel zugeschaltet und, insbesondere in Richtung zur Probenansaugkanüle, gepumpt werden kann. Daneben ist es möglich, den Dilutor zum Ansaugen einer Probe aus einem Probengefäss beziehungsweise zur Förderung der angesaugten Probe zur Analyse im Flüssiggaschromatografen zu verwenden. Dazu ist vorzugsweise im oder am Hohlstempel ein Ventil separates Ventil vorgesehen, um eine Vermischung von Probe und Waschlösungsmittel, insbesondere durch ein Nachlaufen oder - tropfen des letzteren, verhindern zu können.

Dabei wird der Dilutor bevorzugt so eingesetzt, dass er, wenn die Injektionsventileinheit sich in der Ruheposition (obere Endposition) befindet, das Waschlösungsmittel von hinten durch das Injektionsventil und die Probenansaugkanüle fördert und dadurch diese von innen reinigt, während in der Ansaugposition (untere Endposition) die Probe aus einem Probengefäss über die Probenansaugkanüle und das Injektionsventil angesaugt beziehungsweise zum Flüssiggaschromatografen für die Analyse gefördert wird, beziehungsweise in den Zwischenpositionen zwischen oberer und unterer Endposition das Waschlösungsmittel über die Führungsstangen zur und von der als Waschkammer ausgebildeten Führung gefördert wird und dadurch eine Reinigung der Probenansaugkanüle von aussen ermöglicht wird.

In der Ruheposition (obere Endposition) kann das über die Probenansaugkanüle zugeführte Waschlösungsmittel, das sich in der Waschkammer sammelt, aus der Waschkammer, insbesondere durch die Absaugkanalführungsstange, abgesaugt werden. In der Ansaugposition (untere Endposition) kann die Probe über die Probenansaugkanüle angesaugt werden, während kein Waschlösungsmittel zur Reinigung angewendet wird, wodurch eine Kontamination durch Waschlösungsmittel weitgehend ausgeschlossen ist. In Zwischenpositionen, insbesondere Positionen zwischen der Ruhe- und der Ansaugposition, kann das über die Führungsstange für die Zuleitung des Waschlösungsmittels zugeführte Waschlösungsmittel, das sich in der Waschkammer sammelt und die Aussenseite der durch die Waschkammer bewegten Probenansaugkanüle reinigt, aus der Waschkammer, insbesondere durch die Absaugkanalführungsstange, abgesaugt werden, insbesondere zeitgleich.

Diese voneinander getrennten Prozessschritte werden zusätzlich über das Selectorventil in Verbindung mit dem Injektionsventil so gesteuert, dass an dem Dilutor beziehungsweise den Führungsstangen jeweils die richtigen Substanzen insbesondere Waschlösungsmittel oder die Probe anstehen. Vorzugsweise sind die verschiedenen genannten Prozessschritte so voneinander getrennt, dass entweder eine Reinigung von aussen oder eine Reinigung von innen oder eine Entnahme oder eine Weiterförderung der Probe erfolgt und dadurch ein Mischzustand verhindert ist.

Auf diese Weise wird neben der Reduktion des Risikos einer Verschleppung oder Kontamination die Dauer eines Injektionszyklus merklich verkürzt und die Handhabung des Probengebersystems vereinfacht. Darüber hinaus kann das Waschlösungsmittel während der Messungen nach Bedarf dosiert werden, was zu einer sehr flexiblen und sicheren Handhabung führt, da die Dosierung des Waschlösungsmittels genau auf die Art der Probe und ihre Eigenschaft, an der Probenansaugkanüle zu haften, abgestimmt werden kann. Durch diese Ausgestaltung des Probengebersystems kann auch die Länge der Injektionszyklenzeit sehr kurz werden.

In einer bevorzugten Ausgestaltung des erfindungsgemässen Probengebersystems kann die Probenansaugkanüle aus Titan ausgebildet sein. Durch die spröden Materialeigenschaften des Titans ist eine Verwendung in herkömmlichen Probengebern beim Stand der Technik nicht sinnvoll, da Kanülen aus Titan insbesondere bei Biegungen zum Beispiel während der Montage, der Wartung oder der Reinigung sehr leicht brechen können. Durch die beschriebene, erfindungsgemässe, besondere Art der starren Verbindung der Probenansaugkanüle mit der Injektionsventileinheit und der Reinigung auf der Innenseite und der Aussenseite der Probenansaugkanüle mit der definierten und der starren Struktur aus Injektionsventileinheit mit Injektionsventil und Probenansaugkanüle, die gemeinsam während dem Reinigungsprozess sicher geführt werden, gelingt es ein Verbiegen und eine Torsion der Probenansaugkanüle erfindungsgemäss zu verhindern. Dadurch können erfindungsgemäss Probenansaugkanülen aus Titan verwendet werden, und diese direkt mit dem Chromatografen, insbesondere Flüssiggaschromatografen, zu verbinden, so dass einerseits die möglicherweise mit Probenmaterial kontaminierten Oberflächen klein gehalten werden können und andererseits die Probenansaugkanüle durch die Verwendung von Titan gegen Korrosion durch die Proben oder durch das Waschlösungsmittel weitgehend geschützt ist. Darüber hinaus ist ein Anhaften von Probenmaterial oder Waschlösungsmittel an eine Kanüle aus Titan durch das inerte Verhalten des Titans weitgehend verhindert, so dass die Reinigung der Kanüle stark vereinfacht wird. Durch diese Ausbildung der Kanüle ist also eine dauerhafte und robuste Probenansaugkanüle gegeben, die zum einen direkt mit dem Chromatografen, insbesondere Flüssiggaschromatografen, verbunden werden kann und zum anderen besonders leicht gereinigt werden kann.

Bei einem vorteilhaften Probengebersystem kann die Führung der Probenansaugkanüle im unteren Bereich ein Querloch aufweisen. Dadurch kann ein möglicher Unterdruck, der durch das zeitgleiche Reinigen der Aussenseite der Probenansaugkanüle durch Umspülen mit Waschlösungsmittel beim Herausziehen der Kanüle aus der Probe entstehen könnte, auf einfache und effektive Weise verhindert werden und dadurch das Risiko eine Beschädigung verringert werden.

Vorteilhafterweise kann die Führung der Probenansaugkanüle in dem erfindungsgemässen Probengebersystem im unteren Bereich der Führung, insbesondere an der Unterseite des Führungsunterteils, eine Penetrationsvorrichtung, insbesondere eine Vorstichandehnung, aufweisen, durch die die Probenansaugkanüle austreten kann und eine Verschlusskappe des Probengefässes durchstossen kann, um anschliessend mit der Probenansaugkanüle ohne eine Belastung durch das Durchstossen eine Probe zu entnehmen und zur flüssigchromatografischen Untersuchung zuzuführen. Auf diese Weise ist eine besonders sichere und fehlerarme Handhabung des Probengebersystems gewährleistet. Die Penetrationsvorrichtung kann dabei als Teil der oder angrenzend an die, insbesondere unterhalb der Austrittsöffnung gebildet sein, beispielsweise in Form eines Hohlzylinders, welcher an einem von der Waschkammer abgewandten Ende schräg angeschnitten und/oder angespitzt sein kann, um ein sicheres Durchstossen der Verschlusskappe zu erleichtern bzw. zu gewährleisten, wenn die Führung hinreichend weit in Richtung zu der Probenaufnahme verfahren wird.

Eine Kombination aus Penetrationsvorrichtung und erstem Führungselement erlaubt die Verwendung einer flexiblen Probenansaugkanüle 3 insbesondere aus Kunststoff oder in Form einer flexiblen Kapillare aus Quarzglas ("fused silica"), welche mit Kunststoff, insbesondere Polyimid, beschichtet sein kann. Die Verwendung einer flexiblen Probenansaugkanüle 3 erlaubt eine einfachere Ausgestaltung des Probengebers und kürzere Probenentnahmezyklen, da, insbesondere im Vergleich mit starren Probenansaugkanülen, mit geringerer Positioniergenauigkeit des ersten Antriebs gearbeitet werden kann. Insbesondere dann, wenn die Probe vollständig aus dem Probengefäss entnommen werden soll, muss eine starren Probenansaugkanülen exakt mit deren Spitze auf dem Boden des Probengefässes platziert werden, um Beschädigungen zu vermeiden; wodurch allerdings eine am distalen Ende, insbesondere der Spitze der Probenansaugkanüle gebildete Ansaugöffnung zumindest teilweise, im ungünstigsten Fall sogar weitgehend verschlossen wird.

Die Weiterbildungen der Erfindung ermöglichen bei einer geringen Injektionszykluszeit eine sehr geringe Verschleppung und damit eine sehr geringe Beeinträchtigung der chromatografischen Messungen durch Kontamination. Es gelingt die mit Probe kontaminierten Oberflächen und Bereiche des Probengebersystems möglichst klein zu halten und bevorzugt möglichst inert zu gestalten. Dadurch können die Waschprozeduren schnell und effizient ablaufen und die Ladefunktion der Proben durch das Probengebersystem schnell und genau erfolgen.

Diese Wirkungen der Weiterbildungen werden dadurch erreicht, dass die Probenansaugkanüle ohne Zwischenleitung direkt mit dem HPLC/UHPLC-Injektionsventil insbesondere starr verbunden ist, dass die Probenansaugkanüle aus Titan sein kann, dass das Injektionsventil mit der Probenansaugkanüle für die Probenaufnahme gemeinsam als Einheit zur Probe geführt wird, dass die Kanülenführung als spezifischer Hohlraum als Waschkammer für die Probenansaugkanüle ausgebildet ist, welche über einen Waschlösungsmittel-Einlass und über einen Waschlösungsmittel-Auslass verfügt. Dabei ist der Waschlösungsmittel-Auslass mit einer Vakuumpumpe und einem Auffanggefäss verbunden, so dass das zugeführte Waschlösungsmittel über den Auslass in das Auffanggefäss abgesaugt werden kann und das Waschlösungsmittel mittels Pumpen durch ein Selectorventil durch den Hohlstempel der Dilutorspritze und anschliessend durch das Injektionsventil sowie anschliessend durch die Probenansaugkanüle oder durch den Waschlösungsmittel-Einlass in der Kanülenführung gepumpt wird, das der Rotor des Selectorventils so positioniert werden kann, dass alle Anschlüsse verschlossen sind und dadurch mittels dem Dilutor Probe angesaugt werden kann, dass, während die Kanüle aus der Probe gezogen wird, gleichzeitig die Kanülenaussenseite in der Kanülenführung gewaschen werden kann. Dabei wird die Kanülenführung in der Flucht der Kanüle zum Injektionsventil verschoben. Als Eingangsleitung und Auslassleitung für die Waschlösungsmittel dienen dabei die Führungsstangen für die Kanülenführung. Zusätzlich verhindert ein Querloch im unteren Bereich der Kanülenführung, dass sich im Probengefäss ein Unterdruck aufbauen kann.

Im Folgenden wird anhand der beiliegenden Zeichnungen ein bevorzugtes Ausführungsbeispiel der Erfindung beschrieben.

Es zeigen
- Fig. 1: einen beispielhaften Systemaufbau eines erfindungsgemässen Probengebersystems,
- Fig. 2: eine beispielhafte Injektionseinheit in Parkposition,
- Fig. 3: eine beispielhafte Injektionseinheit Übergang in die Probenposition und
- Fig. 4: eine beispielhafte Injektionseinheit in Probenaufnahmeposition

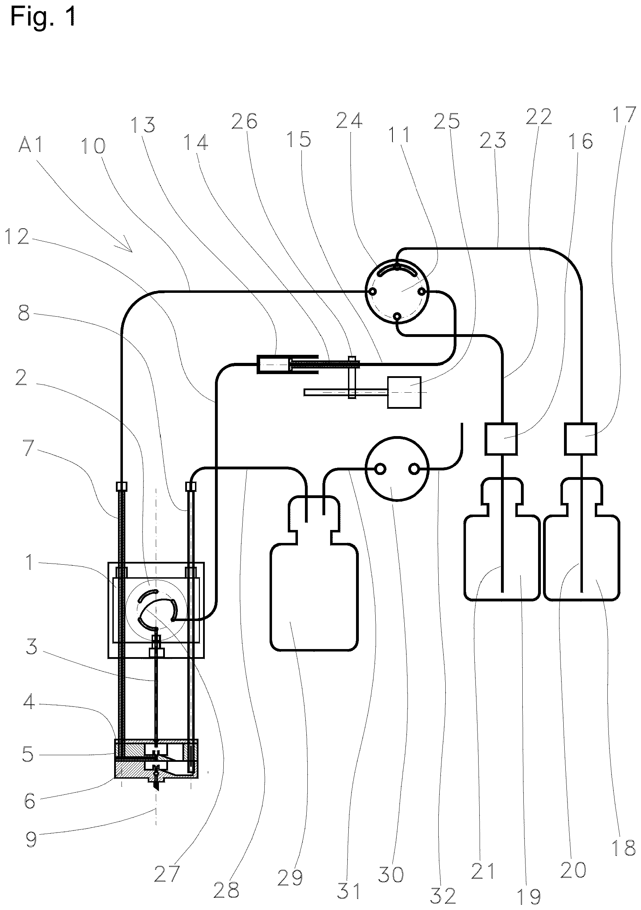

Die Fig. 1 zeigt einen beispielhaften Aufbau eines erfindungsgemässen Probengebersystems 1A mit der Injektionseinheit 1B, mit Injektionsventil 2 und der direkt verschraubten und damit starr verbundenen Probenansaugkanüle 3.

Die Probenansaugkanüle 3 verfügt über eine mehrteilige Kanülenführungseinheit, bestehend aus dem Führungsdeckel 4, dem Führungsmittelteil 5 und dem Führungsunterteil 6, der Führungsstange 7 für die Zuleitung des Waschlösungsmittels - auch Waschlösungszuleitungsführungsstange 7 genannt - und der Absaugkanalführungsstange 8, wobei Führungsdeckel 4, Führungsmittelteil 5 und Führungsunterteil 6 eine eigentliche Führung für die Probenansaugkanüle 3 bilden können. Die Absaugkanalführungsstange 8 kann auf der Kanülenachse 9 gegenüber der Injektionsventileinheit 1 verschoben werden, wobei das Eigengewicht und eine leichte Federkraft überwunden wird. Die Verschiebung ermöglicht das Einbringen der Probenansaugkanüle 3 in eine Probengefäss 35 zur Entnahme der zu untersuchenden und durch das Probengebersystem 1A zu fördernden Probe. Nach der Entnahme wird die Injektionsventileinheit 1 entlang der Kanülenachse 9 geführt durch die Führungsstange 7 für die Zuleitung des Waschlösungsmittels und die Absaugkanalführungsstange 8 zurückverschoben.

Die Führungsstange 7 für die Zuleitung des Waschlösungsmittels ist über die Waschleitung 10 direkt mit dem Selectorventil 11 zur Steuerung des Waschlösungsmittels verbunden. Die Leitung 12 führt über die Dilutorspritze 13, über den Dilutorspritzenhohlstempel 14 und die Leitung 15 auch zum Selectorventil 11. Mit den Waschlösungsmittelpumpen 16, 17 können Waschlösungsmittel aus den Flaschen 18, 19 über die Ansaugleitungen 20, 21 und die Verbindungsleitungen 22, 23 zum Selectorventil 11 gepumpt werden.

Der Selectorventilkanal 24 kann so positioniert werden, dass alle Selecorventilanschlüsse verschlossen sind oder eine Verbindung zwischen nebeneinander liegenden Selectorventilanschlüssen besteht. Dazu kann der Selectorventilkanal 24 im Selectorventil 11 in 45° Schritten um 360° gedreht werden.

Steht der Selectorventilkanal 24 zur Leitung 15 in einer Verschlussposition, kann mit dem Dilutorantrieb 25 via dem Dilutorantriebadapter 26 der Dilutorspritzenhohlstempel 14 verschoben werden und somit genau definierte Mengen Waschlösungsmittel oder Probe über die Probenansaugkanüle 3 angesaugt oder ausgestossen werden. Dabei wird durch die Ventilstellung des Injektionsventils 2 bestimmt, ob das Waschlösungsmittel oder die Probe über die Probenschlaufe 27 oder direkt von der Leitung 12 zur Probenansaugkanüle 3 geführt wird.

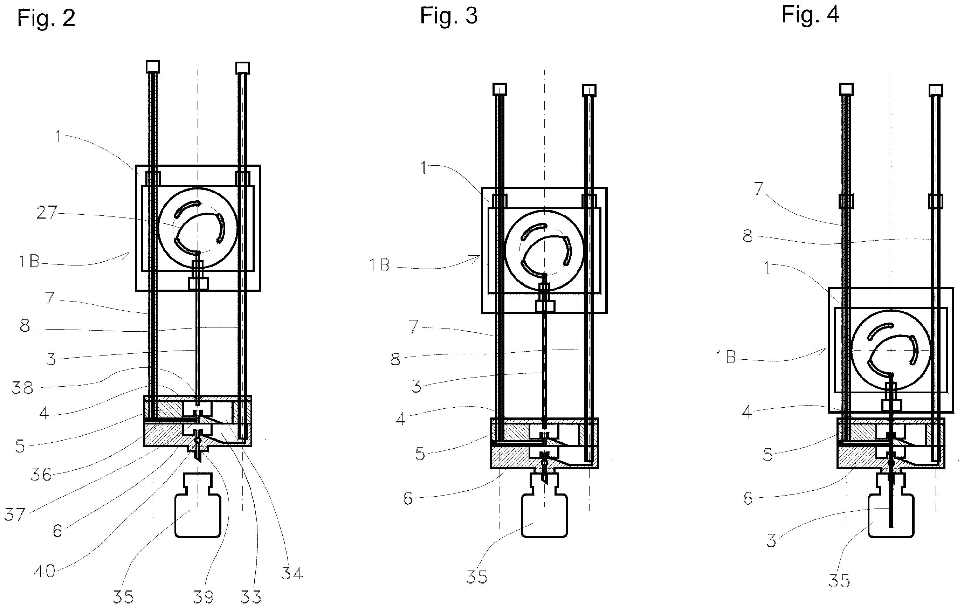

Die Absaugkanalführungsstange 8 ist mit der Absaugleitung 28 verbunden, welche in die vakuumfeste Abfallflasche 29 führt. Mit Hilfe der Vakuumpumpe 30 mit der Abluftleitung 32 wird über die Vakuumleitung 31 und die Absaugkanalführungsstange 8 im Hohlraum 33, 34, welcher insbesondere einen ersten Hohlraum 33 und einen zweiten Hohlraum 34 umfasst, der in Fig.2 dargestellt ist, ein Unterdruck erzeugt, mit dem ggf. Waschlösungsmittel abgesaugt wird.

In den Fig. 2, 3 und 4 sind drei verschiedene Positionen der Injektionsventileinheit 1 in der Injektionseinheit 1B dargestellt, wobei Fig. 2 die Parkposition der Injektionsventileinheit 1 zeigt. In Fig. 4 ist die Position der Injektionsventileinheit 1 in der Position der Probenaufnahme also bei der Entnahme der Probe aus dem Probengefäss 35 und deren Förderung zur Untersuchung in den Flüssiggaschromatografen dargestellt. In Fig. 3 ist die Position der Injektionsventileinheit 1 während dem Übergang von der Parkposition in die Position der Probenaufnahme dargestellt, in der eine umfassende Reinigung der Probenansaugkanüle 3 erfolgen kann.

Die Injektionsventileinheit 1 mit Injektionsventil 2 und die direkt verschraubte Probenansaugkanüle 3 sind zu einer starre verbundenen Einheit verbunden, die gegenüber der mehrteiligen Kanülenführungseinheit, bestehend aus dem Führungsdeckel 4, dem Führungsmittelteil 5 und dem Führungsunterteil 6, der Führungsstange 7 für die Zuleitung des Waschlösungsmittels und der Absaugkanalführungsstange 8, die sich in Richtung einer Z-Achse, entsprechend der Kanülenachse 9, vorzugsweise in vertikaler Richtung erstrecken, verschiebbar ist, insbesondere mittels eines ersten Antriebs..

Wie mit Fig. 3 dargestellt kann die mehrteilige Kanülenführungseinheit 4, 5 ,6, insbesondere mittels eines zweiten Antriebs, auf das Probengefäss 35 aufgesetzt werden, wobei ggf. die Penetrationsvorrichtung eine Verschlusskappe des Probengefässes durchstossen kann und die Probenansaugkanüle 3 durch Absenken der Injektionsventileinheit 1 entlang der Z-Achse also entlang der Kanülenachse 9, wie in Fig. 4 dargestellt, in das Probengefäss 35 zur Probenaufnahme gelangen.

Mit der Dilutoreinheit bestehend aus Dilutorspritze 13, Dilutorspritzenhohlstempel 14, Dilutorantriebadapter 26 und Dilutorantrieb 25, kann die Probe aus dem Probengefäss 35 über die Probenansaugkanüle 3 und die Leitung 12 angesaugt und in die Probenschlaufe 27 verschoben werden. Durch Schalten des Injektionsventils 2 erfolgt dann die eigentliche Injektion in das LCMS-System. Nach der Injektion in das LCMS-System wird mittels eine Verschiebung entlang der Z-Achse, also entlang der Kanülenachse 9, die Probenansaugkanüle 3 durch einen Antrieb, insbesondere den ersten Antrieb, bewegt zurückgezogen. Dies wird in Fig.4, Fig. 3 und Fig.2, dargestellt.

Während des Zurückziehens wird die Aussenseite der Probenansaugkanüle 3 im Führungsmittelteil 5 mit Waschlösungsmittel gewaschen. Dabei wird das Waschlösungsmittel aus den Flaschen 18 oder 19 über die Ansaugleitungen 20 oder 21 mit Hilfe der Waschlösungsmittelpumpen 16 oder 17 durch die Verbindungsleitung 22 oder 23 zum Selectorventil 11 gepumpt. Vom Selectorventil 11 gelangt das Waschlösungsmittel durch den Selectorventilkanal 24, durch die Waschleitung 10 in die Führungsstange 7 für die Zuleitung des Waschlösungsmittels. Anschliessend wird es durch den Waschkanal 36 im Führungsmittelteil 5 in die Verbindungsöffnung 37 gepumpt, durch die die Probenansaugkanüle 3 zurückgezogen wird.

Die Verbindungsöffnung 37, welche insbesondere die Wascheinrichtung mit dem ersten Führungskanal bildet, zeigt einen becherförmigen Abschnitt mit einem grösseren Durchmesser als die Probenansaugkanüle 3. Durch den becherförmigen Abschnitt wird die Probenansaugkanüle 3 durchgeführt, wodurch diese in dem becherförmigen Abschnitt mit Waschlösungsmittel beaufschlagt werden kann. Das in den becherförmigen Abschnitt eingebrachte Waschlösungsmittel wird in dem Abschnitt bis zum Überlaufen gesammelt und ermöglicht ein sicheres Reinigen der Aussenflächen der hindurchgeführten Probenansaugkanüle 3, auch wenn nur geringe Mengen an Waschlösungsmittel zugeführt wurden.

Das dabei verunreinigte Waschlösungsmittel wird in den Hohlräumen 33, 34 der Waschkammer in der mehrteiligen Kanülenführungseinheit 4, 5 ,6 aufgefangen und aus dem unteren Hohlraum 33 über die Absaugkanalführungsstange 8, welche den Ablauf für das Waschlösungsmittel bildet, und die Absaugleitung 28 in die vakuumfeste Abfallflasche 29 mit Hilfe der Vakuumpumpe 30 abgesaugt. Dabei wird auch Luft durch den Spalt zwischen der Probenansaugkanüle 3 und dem Führungsloch 38, welches die Eintrittsöffnung bzw. den zweiten Führungskanal bildet, dargestellt in Fig.2, im Führungsdeckel 4 und dem Spalt zwischen der Probenansaugkanüle 3 und dem Führungsloch 39 im Führungsunterteil 6 angesaugt, welches ein Querloch 40 aufweisen kann, sofern sich die Probenansaugkanüle 3 noch im Führungsunterteil 6 befindet. Andernfalls wird Luft durch das Führungsloch 39, welches die Auslassöffnung bzw. den dritten Führungskanal bildet, mit Querloch 40 angesaugt, um einen Unterdruck insbesondere im Probengefäss 35 zu vermeiden.

Die Reinigung der Aussenseite der Probenansaugkanüle 3 kann sowohl beim Absenken der Probenansaugkanüle 3 also beim Einbringen in das Probengefäss 35 zur Probenaufnahme wie auch beim Anheben der Probenansaugkanüle 3 also beim Herausziehen aus dem Probengefäss 35 erfolgen.

Sobald die Probenansaugkanüle 3 ihre obere Position erreicht hat, wie in Fig.2 und Fig. 3 dargestellt, wird das Selectorventil 11 mit Selectorventilkanal 24 so eingestellt, dass Waschlösungsmittel zur Reinigung der mit Probe kontaminierten Innenflächen und des Innenvolumens der Probenansaugkanüle 3 durch die Leitung 15 über den Dilutorspritzenhohlstempel 14, über die Dilutorspritze 13, und die Leitung 12 durch das Injektionsventil 2 durch die Probenansaugkanüle 3 gepumpt wird. Dadurch werden die mit Probe kontaminierten Innenflächen und Innenvolumen der Probenansaugkanüle 3 gereinigt.

Erfindungsgemäss erfolgt damit eine sehr effiziente Reinigung der der Probenansaugkanüle 3, sowohl von innen wie auch von aussen, wodurch das Risiko einer Verschleppung oder Kontamination einer Probe erheblich gesenkt werden kann. Auch kann die Probenentnahme zumindest anteilig automatisiert werden und die hierfür benötigte Zeit reduziert werden.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Um die Erfindung nicht zu verklären, können in gewissen Fällen wohlbekannte Strukturen und Techniken nicht im Detail gezeigt und beschrieben sein. Es versteht sich, dass Fachleute Änderungen und Abwandlungen machen können, ohne den Umfang der folgenden Ansprüche zu verlassen.

Im Weiteren schliesst der Ausdruck "umfassen" und oder Ableitungen davon andere Elemente oder Schritte nicht aus. Ebenfalls schliesst der unbestimmte Artikel "ein" bzw. "eine" und Ableitungen davon eine Vielzahl nicht aus. Die Funktionen mehrerer in den Ansprüchen aufgeführter Merkmale können durch eine Einheit beziehungsweise einen Schritt erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Die Begriffe "etwa" und "ungefähr" im Zusammenhang mit einem gegebenen Zahlenwert oder-bereich kann sich auf einen Wert beziehungsweise Bereich beziehen, der innerhalb 20%, innerhalb 10%, innerhalb 5% oder innerhalb 2% des gegebenen Werts beziehungsweise Bereichs liegt. Alle Bezugszeichen in den Ansprüchen sind nicht als den Umfang der Ansprüche einschränkend zu verstehen. Eine Angabe, wonach a ≈ b gilt, kann dahingehend zu verstehen sein, dass |a-b|/(|a|+|b|) < 0,2, vorzugsweise |a-b|/(|a|+|b|) < 0,05, höchst vorzugsweise |a-b|/(|a|+|b|) < 0,01 gilt, wobei a und b beliebige, an irgendeiner Stelle in diesem Dokument definierte und/oder beschriebene oder anderweitig dem Fachmann bekannte Variablen oder Grössen repräsentieren kann.

Dass ein Merkmal oder eine Eigenschaft, beispielsweise eine spezifische, insbesondere geometrische, Form, zumindest näherungsweise ausgebildet, vorgesehen oder vorhanden ist, kann insbesondere bedeuten, dass Fertigungsvorgaben existieren, welche eine Vorgabe vorsehen, gemäss welcher das Merkmal entsprechend ausgebildet wird, wobei im Rahmen üblicher, dem Fachmann bekannter Fertigungstoleranzen eine Abweichung von der Vorgabe resultieren kann.

Dass ein Element oder Merkmal in einer Richtung ausgedehnt ist oder sich in einer Richtung erstreckt, kann insbesondere bedeuten, dass Abmessungen des Elements oder Merkmals in dieser Richtung grösser sind als in anderen, insbesondere allen anderen Richtungen, insbesondere orthogonalen Richtungen.

Die Begriffe "oben", "unten", "vorne", "hinten" beziehen sich insbesondere auf die Injektionseinheit bzw. den Aufbau in derjenigen Orientierung, in welcher diese in Fig. 2 gezeigt sind.

### Bezugszeichenliste

- 1A.: Probengebersystem
- 1B.: Injektionseinheit
- 1.: Injektionsventileinheit
- 2.: Injektionsventil
- 3.: Probenansaugkanüle
- 4.: Führungsdeckel
- 5.: Führungsmittelteil
- 6.: Führungsunterteil
- 7.: Waschlösungszuleitungsführungsstange
- 8.: Absaugkanalführungsstange
- 9.: Kanülenachse
- 10.: Waschleitung
- 11.: Selectorventil
- 12.: Leitung
- 13.: Dilutorspritze
- 14.: Dilutorspritzenhohlstempel
- 15.: Leitung
- 16.: Waschlösungsmittelpumpe
- 17.: Waschlösungsmittelpumpe
- 18.: Flasche
- 19.: Flasche
- 20.: Ansaugleitung
- 21.: Ansaugleitung
- 22.: Verbindungsleitung
- 23.: Verbindungsleitung
- 24.: Selectorventilkanal
- 25.: Dilutorantrieb
- 26.: Dilutorantriebadapter
- 27.: Probenschlaufe
- 28.: Absaugleitung
- 29.: Abfallflasche
- 30.: Vakuumpumpe
- 31.: Vakuumleitung
- 32.: Abluftleitung
- 33.: Hohlraum
- 34.: Hohlraum
- 35.: Probengefäss
- 36.: Waschkanal
- 37.: Verbindungsöffnung
- 38.: Führungsloch
- 39.: Führungsloch
- 40.: Querloch
- 41.: Vorstichandehnung

## Patentansprüche

1. Probengebersystem (1A), insbesondere für die Flüssigchromatografie, umfassend
a. eine Probenaufnahme zur Aufbewahrung oder Bevorratung einer flüssigen Probe,
b. eine Probenansaugkanüle (3) zum Ansaugen einer in der Probenaufnahme befindlichen Probe, welche Probenansaugkanüle (3) mittels eines Antriebs in Richtung zu der Probenaufnahme hin geführt werden kann, so dass ein distales Ende, insbesondere eine Spitze, der Probenansaugkanüle (3) in die Probe eintaucht,
c. eine Führung (4, 5, 6) für die Probenansaugkanüle (3), welche
i. eine Waschkammer bildet, welche einen ersten Hohlraum (33) und einen zweiten Hohlraum (34) aufweist sowie eine Eintrittsöffnung und eine Austrittsöffnung für die Probenansaugkanüle (3) umfasst, welche jeweils einen Führungskanal für die Probenansaugkanüle (3) bilden, sowie
ii. ein oberhalb der Probenaufnahme vorgesehenes Führungselement für die Probenansaugkanüle (3) umfasst, welches als Wascheinrichtung in einem Inneren der Waschkammer ausgebildet ist, wobei
iii. der erste Hohlraum (33) und der zweite Hohlraum (34) ausschliesslich durch das Führungselement (5), miteinander verbunden sind und
iv. das Führungselement derart ausgebildet ist, dass es einen becherförmigen Abschnitt mit einem Durchmesser, welcher mindestens ein Zweifaches eines Aussendurchmessers der Probenansaugkanüle (3) beträgt, aufweist, durch welchen Abschnitt die Probenansaugkanüle (3) geführt wird und mit Waschlösungsmittel beaufschlagt werden kann,
d. die Probenansaugkanüle (3) mittels des Antriebs zumindest soweit von der Probenaufnahme zurückgefahren werden kann, dass das distale Ende der Probenansaugkanüle (3) in der Wascheinrichtung gereinigt werden kann.

2. Probengebersystem (1A) nach Anspruch 1, wobei das Führungselement einen ersten Führungskanal bildet und das distale Ende der Probenansaugkanüle (3) vollständig aus besagtem ersten Führungskanal zurückziehbar ist, wobei vorzugsweise die Austrittsöffnung und der erste Führungskanal mit einem grösseren Innendurchmesser ausgeführt sind als der Aussendurchmesser der Probenansaugkanüle, so dass die entsprechenden Öffnungen bzw. Kanäle durch die Probenansaugkanüle teilweise, aber nicht vollständig verschlossen, insbesondere nicht abgedichtet werden.

3. Probengebersystem (1A) nach Anspruch 1 oder 2, wobei der becherförmige Abschnitt des Führungselements ein Rückhaltevolumen für das Waschlösungsmittel bildet und nach oben durch einen Überlauf begrenzt ist, wobei der becherförmige Abschnitt vorzugsweise einen Durchmesser aufweist, welcher mindestens ein fünffaches eines Aussendurchmessers der Probenansaugkanüle (3) beträgt.

4. Probengebersystem (1A) nach einem der vorangehenden Ansprüche, **dadurch gekennzeichnet, dass** die Eintrittsöffnung und/oder die Austrittsöffnung durch die Probenansaugkanüle (3) zumindest teilweise verschliessbar sind.

5. Probengebersystem (1A) nach einem der vorangehenden Ansprüche, **dadurch gekennzeichnet, dass** die Waschkammer einen Ablauf für das Waschlösungsmittel umfasst, wobei der vorzugsweise Ablauf aus dem ersten Hohlraum (33) herausgeführt und eine Zuleitung für das Waschlösungsmittel in den zweiten Hohlraum (34) geführt ist.

6. Probengebersystem (1A) nach einem der vorangehenden Ansprüche, **dadurch gekennzeichnet, dass** die Führung, das Führungselement, die Waschkammer und/oder die Wascheinrichtung in Richtung zu der Probenaufnahme verfahrbar ist, vorzugsweise unabhängig von der Probenansaugkanüle (3).

7. Probengebersystem (1A) nach einem der vorangehenden Ansprüche, **dadurch gekennzeichnet, dass** Waschlösungsmittel in die Waschkammer, insbesondere über die Zuleitung, gepumpt und gleichzeitig, insbesondere über den Ablauf, abgesaugt oder abgepumpt werden kann.

8. Probengebersystem (1A) nach einem der vorangehenden Ansprüche, **dadurch gekennzeichnet, dass** das Führungselement, insbesondere der erste Führungskanal, die Austrittsöffnung für die Probenansaugkanüle (3) bildet.

9. Probengebersystem (1A) nach einem der vorangehenden Ansprüche, **dadurch gekennzeichnet, dass** das als Wascheinrichtung ausgebildete Führungselement in der Waschkammer vorgesehen ist, wobei die Eintrittsöffnung und die Austrittsöffnung für die Probenansaugkanüle (3) einen zweiten bzw. dritten Führungskanal für die Probenansaugkanüle (3) bilden.

10. Probengebersystem (1A) nach einem der vorangehenden Ansprüche, **dadurch gekennzeichnet, dass** eine Injektionseinheit (1B) mit der Probenansaugkanüle (3) fest zu einer starren Einheit verbunden ist, die insbesondere mit einem gemeinsamen Antrieb bewegt werden kann, wobei die Injektionseinheit (1B) vorzugsweise ein Injektionsventil (2) umfasst, mittels welchem eine Probe wahlweise in und/oder durch die Probenansaugkanüle (3) angesaugt werden oder einem Analysegerät, insbesondere einem Flüssigkeitschromotographen zugeführt werden kann.

11. Probengebersystem (1A) nach einem der vorangehenden Ansprüche, **dadurch gekennzeichnet, dass** eine oder mehrere Führungsstangen (7) der Probenansaugkanüle (3) als Waschlösungsmittel-Zuleitung und/oder Waschlösungsmittel-Absaugkanal ausgebildet sind.

12. Probengebersystem (1A) nach einem der vorangehenden Ansprüche, **dadurch gekennzeichnet, dass** ein Dilutor vorgesehen ist, mittels welchem zumindest ein Teil einer Probe in und/oder durch die Probenansaugkanüle (3) angesaugt werden kann, wobei vorzugsweise der Dilutor über einen Hohlstempel (14) verfügt, durch den, insbesondere von hinten, Waschlösungsmittel zugeführt und durch die Probenansaugkanüle (3) gepumpt werden kann.

13. Probengebersystem (1A) nach einem der vorangehenden Ansprüche, **dadurch gekennzeichnet, dass** die Führung (4, 5, 6) der Probenansaugkanüle (3) im unteren Bereich, ein Querloch (40) aufweist, welches insbesondere in die Austrittsöffnung mündet.

14. Probengebersystem (1A) nach einem der vorangehenden Ansprüche, **dadurch gekennzeichnet, dass** die Führung (4, 5, 6) der Probenansaugkanüle (3) eine Penetrationsvorrichtung, insbesondere eine Vorstichandehnung (41) aufweist, durch die die Probenansaugkanüle austritt.

15. Probengebersystem (1A) nach einem der vorangehenden Ansprüche, **dadurch gekennzeichnet, dass** das distale Ende der Probenansaugkanüle (3) eine Spitze umfasst, und eine Ansaugöffnung in der Spitze gebildet ist.

## Claims

1. Sample delivery system (1A), in particular for liquid chromatography, comprising
a. a sample receptacle for storing or stockpiling a liquid sample,
b. a sample aspiration cannula (3) for aspirating a sample located in the sample receptacle, which sample aspiration cannula (3) can be directed towards the sample receptacle by means of a drive, so that a distal end, in particular a tip, of the sample aspiration cannula (3) is immersed in the sample,
c. a guide (4, 5, 6) for the sample aspiration cannula (3), which
i. forms a washing chamber having a first cavity (33) and a second cavity (34) and comprising an inlet opening and an outlet opening for the sample aspiration cannula (3), each forming a guide channel for the sample aspiration cannula (3), and
ii. a guide element for the sample aspiration cannula (3) provided above the sample receptacle, which is formed as a washing device in an interior of the washing chamber, wherein
iii. the first cavity (33) and the second cavity (34) are connected to each other exclusively by the guide element (5), and
iv. the guide element is designed in such a way that it has a cup-shaped section with a diameter which is at least twice an outer diameter of the sample aspiration cannula (3), through which section the sample aspiration cannula (3) is guided and can be acted upon by washing solvent,
d. the sample aspiration cannula (3) can be retracted from the sample holder by means of the drive at least to such an extent that the distal end of the sample aspiration cannula (3) can be cleaned in the washing device.

2. The sample delivery system (1A) according to claim 1, wherein the guide element forms a first guide channel and the distal end of the sample aspiration cannula (3) is completely retractable from said first guide channel, wherein preferably the outlet opening and the first guide channel are designed with a larger inner diameter than the outer diameter of the sample aspiration cannula, so that the corresponding openings or channels are partially but not completely closed, in particular not sealed, by the sample aspiration cannula.

3. The sample delivery system (1A) according to claim 1 or 2, wherein the cup-shaped portion of the guide element forms a retention volume for the washing solvent and is bounded upwardly by an overflow, wherein the cup-shaped portion preferably has a diameter which is at least five times an outer diameter of the sample aspiration cannula (3).

4. The sample delivery system (1A) according to one of the preceding claims, **characterized in that** the inlet opening and/or the outlet opening can be at least partially closed by the sample aspiration cannula (3).

5. The sample delivery system (1A) according to one of the preceding claims, **characterized in that** the washing chamber comprises an outlet for the washing solvent, the preferably outlet being led out of the first cavity (33) and a supply conduit line for the washing solvent being led into the second cavity (34).

6. The sample delivery system (1A) according to one of the preceding claims, **characterized in that** the guide, the guide element, the washing chamber and/or the washing device can be moved in the direction of the sample receptacle, preferably independently of the sample aspiration cannula (3).

7. The sample delivery system (1A) according to one of the preceding claims, **characterized in that** washing solvent can be pumped into the wash chamber, in particular via the supply conduit, and simultaneously sucked or pumped off, in particular via the drain.

8. The sample delivery system (1A) according to one of the preceding claims, **characterized in that** the guide element, in particular the first guide channel, forms the outlet opening for the sample aspiration cannula (3).

9. The sample delivery system (1A) according to one of the preceding claims, **characterized in that** the guide element designed as a washing device is provided in the washing chamber, the inlet opening and the outlet opening for the sample aspiration cannula (3) forming a second and third guide channel for the sample aspiration cannula (3), respectively.

10. The sample delivery system (1A) according to one of the preceding claims, **characterized in that** an injection unit (1B) is fixedly connected to the sample aspiration cannula (3) to form a rigid unit which can be moved in particular by means of a common drive, the injection unit (1B) preferably comprising an injection valve (2) by means of which a sample can optionally be aspirated into and/or through the sample aspiration cannula (3) or can be supplied to an analyzer, in particular a liquid chromatograph.

11. The sample delivery system (1A) according to one of the preceding claims, **characterized in that** one or more guide rods (7) of the sample aspiration cannula (3) are designed as a washing solvent supply conduit and/or washing solvent aspiration channel.

12. The sample delivery system (1A) according to one of the preceding claims, **characterized in that** a dilutor is provided by means of which at least part of a sample can be aspirated into and/or through the sample aspiration cannula (3), the dilutor preferably having a hollow plunger (14) through which washing solvent can be supplied, in particular from behind, and pumped through the sample aspiration cannula (3).

13. The sample delivery system (1A) according to one of the preceding claims, **characterized in that** the guide (4, 5, 6) of the sample aspiration cannula (3) has a transverse hole (40) in the lower region, which in particular opens into the outlet opening.

14. The sample delivery system (1A) according to one of the preceding claims, **characterized in that** the guide (4, 5, 6) of the sample aspiration cannula (3) has a penetration device, in particular a pre-puncturing expansion (41), through which the sample aspiration cannula emerges.

15. The sample delivery system (1A) according to any one of the preceding claims, **characterized in that** the distal end of the sample aspiration cannula (3) comprises a tip, and an aspiration opening is formed in the tip.

## Revendications

1. Système d'échantillonnage (1A), en particulier pour la chromatographie liquide, comprenant
a. un réceptacle d'échantillon pour stocker ou emmagasiner un échantillon liquide,
b. une canule d'aspiration d'échantillon (3) pour aspirer un échantillon se trouvant dans le réceptacle d'échantillon, laquelle canule d'aspiration d'échantillon (3) peut être guidée vers le réceptacle d'échantillon au moyen d'un entraînement, de sorte qu'une extrémité distale, en particulier une pointe, de la canule d'aspiration d'échantillon (3) plonge dans l'échantillon,
c. un guide (4, 5, 6) pour la canule d'aspiration d'échantillon (3), qui est
i. forme une chambre de lavage ayant une première cavité (33) et une seconde cavité (34) et comprenant une ouverture d'entrée et une ouverture de sortie pour la canule d'aspiration d'échantillon (3), qui forment chacune un canal de guidage pour la canule d'aspiration d'échantillon (3), ainsi que
ii. un élément de guidage pour la canule d'aspiration d'échantillon (3) prévu au-dessus du réceptacle d'échantillon, lequel élément de guidage est formé comme un dispositif de lavage dans un intérieur de la chambre de lavage, dans lequel
iii. la première cavité (33) et la seconde cavité (34) sont reliées l'une à l'autre exclusivement par l'élément de guidage (5), et
iv. l'élément de guidage est conçu de telle sorte qu'il présente une section en forme de coupe dont le diamètre est au moins deux fois supérieur au diamètre extérieur de la canule d'aspiration d'échantillon (3), section à travers laquelle la canule d'aspiration d'échantillon (3) est guidée et peut être sollicitée par le solvant de lavage,
d. la canule d'aspiration d'échantillon (3) peut être rétractée du réceptacle d'échantillon au moyen de l'entraînement au moins dans une mesure telle que l'extrémité distale de la canule d'aspiration d'échantillon (3) peut être nettoyée dans le dispositif de lavage.

2. Système d'échantillonnage (1A) selon la revendication 1, dans lequel l'élément de guidage forme un premier canal de guidage et l'extrémité distale de la canule d'aspiration d'échantillon (3) est complètement rétractable dudit premier canal de guidage, dans lequel de préférence l'ouverture de sortie et le premier canal de guidage sont conçus avec un diamètre intérieur plus grand que le diamètre extérieur de la canule d'aspiration d'échantillon, de sorte que les ouvertures ou canaux correspondants sont partiellement mais pas complètement fermés, en particulier pas étanches, par la canule d'aspiration d'échantillon.

3. Système d'échantillonnage (1A) selon la revendication 1 ou 2, dans lequel la partie en forme de coupe de l'élément de guidage forme un volume de rétention pour le solvant de lavage et est délimitée vers le haut par un trop-plein, la partie en forme de coupe ayant de préférence un diamètre qui est au moins cinq fois un diamètre extérieur de la canule d'aspiration d'échantillon (3).

4. Système d'échantillonnage (1A) selon l'une des revendications précédentes, **caractérisé en ce que** l'ouverture d'entrée et/ou l'ouverture de sortie peut être au moins partiellement fermée par la canule d'aspiration d'échantillon (3).

5. Système d'échantillonnage (1A) selon l'une des revendications précédentes, **caractérisé en ce que** la chambre de lavage comprend une sortie pour le solvant de lavage, la sortie étant de préférence conduite hors de la première cavité (33) et une conduite d'alimentation pour le solvant de lavage étant conduite dans la deuxième cavité (34).

6. Système d'échantillonnage (1A) selon l'une des revendications précédentes, **caractérisé en ce que** le guide, l'élément de guidage, la chambre de lavage et/ou le dispositif de lavage peuvent être déplacés en direction du réceptacle d'échantillon, de préférence indépendamment de la canule d'aspiration d'échantillon (3).

7. Système d'échantillonnage (1A) selon l'une des revendications précédentes, **caractérisé en ce que** le solvant de lavage peut être pompé dans la chambre de lavage, en particulier par la conduite d'alimentation, et simultanément aspiré ou pompé, en particulier par l'évacuation.

8. Système d'échantillonnage (1A) selon l'une des revendications précédentes, **caractérisé en ce que** l'élément de guidage, en particulier le premier canal de guidage, forme l'ouverture de sortie pour la canule d'aspiration d'échantillon (3).

9. Système d'échantillonnage (1A) selon l'une des revendications précédentes, **caractérisé en ce que** l'élément de guidage conçu comme un dispositif de lavage est prévu dans la chambre de lavage, l'ouverture d'entrée et l'ouverture de sortie pour la canule d'aspiration d'échantillon (3) formant respectivement un deuxième et un troisième canal de guidage pour la canule d'aspiration d'échantillon (3).

10. Système d'échantillonnage (1A) selon l'une des revendications précédentes, **caractérisé en ce qu'**une unité d'injection (1B) est reliée de manière rigide à la canule d'aspiration d'échantillon (3) pour former une unité rigide qui peut être déplacée, en particulier au moyen d'un entraînement commun, l'unité d'injection (1B) comprenant de préférence une soupape d'injection (2) au moyen de laquelle un échantillon peut être aspiré au choix dans et/ou à travers la canule d'aspiration d'échantillon (3) ou fourni à un dispositif d'analyse, en particulier un chromatographe en phase liquide.

11. Système d'échantillonnage (1A) selon l'une quelconque des revendications précédentes, **caractérisé en ce qu'**une ou plusieurs tiges de guidage (7) de la canule d'aspiration d'échantillon (3) sont formées comme une ligne d'alimentation en solvant de lavage et/ou un canal d'aspiration de solvant de lavage.

12. Système d'échantillonnage (1A) selon l'une des revendications précédentes, **caractérisé en ce qu'**il est prévu un dilueur au moyen duquel au moins une partie d'un échantillon peut être aspirée dans et/ou à travers la canule d'aspiration d'échantillon (3), le dilueur présentant de préférence un piston creux (14) à travers lequel un solvant de lavage peut être amené, en particulier par l'arrière, et pompé à travers la canule d'aspiration d'échantillon (3).

13. Système d'échantillonnage (1A) selon l'une des revendications précédentes, **caractérisé en ce que** le guide (4, 5, 6) de la canule d'aspiration d'échantillon (3) présente, dans la région inférieure, un trou transversal (40) qui débouche notamment dans l'ouverture de sortie.

14. Système d'échantillonnage (1A) selon l'une quelconque des revendications précédentes, **caractérisé en ce que** le guide (4, 5, 6) de la canule d'aspiration d'échantillon (3) présente un dispositif de pénétration, notamment une expansion de pré-piqûre (41), par lequel émerge la canule d'aspiration d'échantillon.

15. Système d'échantillonnage (1A) selon l'une quelconque des revendications précédentes, **caractérisé en ce que** l'extrémité distale de la canule d'aspiration d'échantillon (3) comprend une pointe, et une ouverture d'aspiration est formée dans la pointe.
